# EUROPÄISCHE PATENTSCHRIFT

(11) **EP 1 628 055 B1**
(45) Veröffentlichungstag und Bekanntmachung des Hinweises auf die Patenterteilung: **16.07.2008**
(21) Anmeldenummer: 05107453.2
(22) Anmeldetag: 12.08.2005
(51) Int. Cl.: F16K 1/30, F16K 15/14

(54) **Restdruckventil**
Residual pressure valve
Soupape de pression résiduelle

(30) Priorität: 16.08.2004 DE 202004012793 U
(43) Veröffentlichungstag der Anmeldung: 22.02.2006
(73) Patentinhaber: Voss Automotive GmbH, 51688 Wipperfürth (DE)
(72) Erfinder: Zenses, Frank Voss Automotive GmbH, 50354 Hürth (DE); Hagen, Harald, 51688 Wipperfürth (DE); Gründel, Reiner, 51647 Gummersbach (DE)
(74) Vertreter: Patentanwälte Dr. Solf & Zapf

(56) Entgegenhaltungen:
- EP-A- 0 987 475
- US-A- 2 747 608
- US-A- 5 588 640
- US-A- 6 070 553

## Beschreibung

Die vorliegende Erfindung betrifft ein Restdruckventil mit einem Ventilkörper und einem Ventilsitz, wobei der Ventilsitz durch ein in einem Gehäuse befestigtes, aus einem Elastomer bestehendes Schlauchstück gebildet ist, das den Ventilkörper unter elastischer Vorspannung umgibt, und wobei der Ventilkörper durch einen axialsymmetrischen Steuerkörper gebildet ist, in einer Ausbildung gemäß dem Oberbegriff des Anspruchs 1 oder des Anspruchs 28.

Restdruckventile, die in verschiedenartiger Ausführung bekannt sind, werden üblicherweise eingesetzt, wenn eine Entleerung eines Druckbehälters oder einer unter Druck stehenden Leitung nicht vollständig erfolgen soll. Damit kann beispielsweise verhindert werden, dass ein anderes Medium, wie zum Beispiel Umgebungsluft, in den ein bestimmtes Fluid beinhaltenden Behälter oder in die entsprechende Leitung eindringt. Bei der Verwendung von Restdruckventilen können sicherheitstechnische Forderungen, Aspekte einer möglichst reinen Wiederbefüllung oder korrosionspräventive Überlegungen eine Rolle spielen. Charakteristisch für Restdruckventile ist, dass sie in Abhängigkeit von dem Erreichen eines bestimmten Ansprechdruckes öffnen bzw. insbesondere bei Unterschreitung eines minimalen Grenzdrucks schließen. Beispielsweise beträgt ein solcher Druck für den Fall des Reißens einer Leitung in einem Luftfedersystem etwa 5 bar.

Die EP-A-0 800 032 beschreibt ein für Zentralschmieranlagen eingesetztes Restdruckventil, welches als Absperrventil zwischen einem Pumpenausgang einer Pumpeneinheit und einer Reibstelle angeordnet ist und aus einer Eingangsleitung, einer Abgangsleitung, einem inneren Elastomerschlauch, einem axialsymmetrischen Absperrkörper, insbesondere einer Kugel, und Klemmverbindern besteht. Die Klemmverbinder können dabei mit einem Schrumpfschlauch überzogen werden, so dass eine Art Gehäuse entsteht. Durch die vorgesehene Anordnung der Eingangsleitung und der Abgangsleitung in ihrem Verhältnis zum inneren Elastomerschlauch wird der Absperrkörper vom inneren Elastomerschlauch zwischen der Eingangsleitung und der Abgangsleitung aufgenommen, wobei jeweils ein Klemmverbinder den inneren Elastomerschlauch so quetscht, dass die Eingangsleitung und die Abgangsleitung über den inneren Elastomerschlauch abgedichtet sind. Eine Druckdifferenz zwischen dem Druck der Schmiermittelpumpe und einer Auflagespannung des inneren Elastomerschlauchs auf den Absperrkörper bewirkt dabei das öffnen und Schließen des Absperrventils, indem der innere Elastomerschlauch zwischen den Klemmverbindem eine Manschette bildet und eine der Druckdifferenz zugeordnete Menge Schmiermittel passieren läßt. Auf diese Weise bildet der Absperrkörper mit dem inneren Elastomerschlauch und dem Schmiermittel eine tribologische Anordnung. Das Ventil weist dabei außerdem einen äußeren Elastomerschlauch und eine an einem Ende der Stirnfläche der Abgangsleitung angeordnete Durchflußkerbe auf und ist derart ausgebildet, dass durch den Druck der Schmiermittelpumpe die summarische Auflagespannung von äußerem Elastomerschlauch und innerem Elastomerschlauch auf den Absperrkörper überwunden und ein Ringspalt gebildet wird, wobei einerseits über die Durchflußkerbe das Schmiermittel direkt in die zur Reibstelle führende Abführungsleitung förderbar ist, andererseits aber bei einem Druck der Schmiermittelpumpe, welcher kleiner als der zum Öffnen des Ringspalts benötigte ist, das Absperrventil geschlossen bleibt. Der innere Elastomerschlauch ist dabei im Hinblick auf die Art des Schmiermittels ausgewählt, während der äußere Elastomerschlauch ermüdungsfrei vorgegebene Elastizitätskennwerte aufweisen soll. Die freie Beweglichkeit der Kugel bei Ausbildung des Ringraums unter der Wirkung des Drucks der Schmiermittelpumpe stellt dabei einen Unsicherheitsfaktor im Hinblick auf eine präzise Funktionserfüllung des Ventils dar.

Ein Restdruckventil der eingangs beschriebenen Art ist aus der US-A-2 747 608 bekannt. Das Dokument beschreibt ein Restdruckventil mit einem Ventilkörper und einem Ventilsitz, wobei der Ventilsitz durch ein in einem Gehäuse befestigtes, aus einem Elastomer bestehendes Schlauchstück gebildet ist, das den Ventilkörper unter elastischer Vorspannung umgibt. Der Ventilkörper ist durch einen sich axial erstreckenden rotationssymmetrischen Steuerkörper gebildet, der von jedem seiner axialen Enden ausgehend jeweils einen Hohlraum aufweist, der über mindestens einen Kanal jeweils mit einer ringförmigen Steuerkammer in Verbindung steht, die in der Außenfläche des Steuerkörpers angeordnet und von der jeweils anderen Steuerkammer durch eine am Schlauchstück anliegende radiale Zwischenwand getrennt ist. Die beiden Steuerkammern und ihre jeweiligen, gegenüber dem Schlauchstück wirksamen Druckflächen sind gleich groß.

Der vorliegenden Erfindung liegt die Aufgabe zu Grunde, ein Restdruckventil der eingangs genannten Art, insbesondere mit einer Eignung für Luftfedersysteme, zu schaffen, das sich durch einen geringen konstruktiven und montagetechnischen Aufwand sowie durch eine präzise und voreinstellbare Druckansprechbarkeit auszeichnet.

Erfindungsgemäß wird dies dadurch erreicht, dass die Steuerkammern eine derart unterschiedliche Größe aufweisen, dass eine Steuerkammer eine größere wirksame Druckfläche gegenüber dem Schlauchstück aufweist als die andere Steuerkammer. Hierzu kann in bevorzugter Ausführung vorgesehen sein, dass die Steuerkammer auf einer Füllseke größer ausgeführt ist bzw. eine größere Druckfläche aufweist als die Steuerkammer auf einer Restdruckseite, wobei insbesondere die Kanäle radial unter einem Winkel von 45 ° bis 90 °, vorzugsweise unter einem Winkel von 80 °, verlaufen.

Durch die Ringform der Steuerkammer lassen sich diese zunächst vorteilhafterweise leicht fertigen, und zwar durch einen Drehvorgang. Zudem ermöglicht die Ringform eine gleichmäßige umfangsgemäße Druckbeaufschlagung. Durchströmt ein Medium unter Fülldruck von einer Füllseite her das erfindungsgemäße Restdruckventil, so gelangt es durch den auf der Füllseite angeordneten Hohlraum, insbesondere eine axiale Bohrung, durch den radial gerichteten Kanal in die erste, insbesondere im Vergleich mit der anderen, größeren Steuerkammer. Unter größer ist dabei zu verstehen, dass die die Steuerkammer umschließende Schlauchfläche, d. h. die wirksame Druckfläche gegenüber dem Schlauchstück, größer ist als die umschließende Schlauchfläche bzw. wirksame Druckfläche der zweiten Steuerkammer auf der Restdruckseite. Die umschließende Schlauchfläche wird dabei mit einem Fülldruck beaufschlagt, der gegen das Schlauchstück wirkt. Dieses übernimmt somit vorteilhafterweise nicht nur die Funktion des Ventilsitzes, sondern auch die Funktion einer Feder. Dabei wird einerseits der konstruktive Aufwand gering gehalten, und andererseits braucht der Ventilkörper zum Öffnen oder Schließen des Ventils keine Bewegungen auszuführen. Unterhalb eines vorherbestimmbaren Ansprechdruckes blockiert die die Steuerkammer auf der Füllseite umschließende Schlauchfläche den Durchfluß des Fluids.

Zusätzlich kann in bevorzugter Ausführung mit Vorteil vorgesehen werden, dass eine vorherbestimmte Vorspannung mit Hilfe einer das Schlauchstück umfangsgemäß umgebenden Feder, insbesondere eines Federbandes oder einer schellenartigen Feder eingestellt ist, wodurch eine höhere Präzision und Stabilität erzielt werden kann. Der Druck wirkt damit nicht nur gegen das Schlauchstück, sondern auch gegen die Federkraft der Feder. Durch den Durchmesser des Schlauchstücks und den Durchmesser des Steuerkörpers im Bereich der Zwischenwand, die unter Beachtung des Elastizitätsmoduls des Schlauchmaterials aufeinander abstimmbar sind, sowie die Kennlinie der Feder kann vorteilhafterweise die Vorspannung und damit der Ansprechdruck des Ventils variiert werden. Die Anordnung einer Feder am Umfang des Schlauchstücks kann auch unabhängig von der speziellen Ausbildung der Steuerkammern oder der übrigen Bauteile vorteilhaft sein, so dass dieses Merkmal unabhängig in Verbindung mit dem eingangs beschriebenen Restdruckventil Gegenstand der Erfindung ist.

Da der Druck eine höhere Kraft auf den Schlauch ausübt als die Feder, wird der Schlauch durch die Druckbeaufschlagung radial gedehnt und öffnet zur zweiten, bevorzugt kleineren, Steuerkammer auf der Restdruckseite. Dabei wird das Schlauchstück von der radialen Zwischenwand abgehoben. Ist der Fülldruck erreicht, schaltet die Druckquelle ab. Die Steuerkammer auf der Füllseite wird drucklos, das Schlauchstück geht in die Ausgangsstellung zurück. Der in der Steuerkammer auf der Restdruckseite erhaltene Restdruck kann seinerseits aber das Ventil nicht öffnen, d.h. das Schlauchstück von der Zwischenwand abheben, weil die druckbeaufschlagte Schlauchfläche kleiner als die Schlauchfläche der Steuerkammer auf der Füllseite ist. Die Relation der Größen der die Steuerkammern umschließenden Schlauchflächen sowie deren Absolutwerte können somit erfindungsgemäß ebenfalls zur Einstellung des Ansprechverhaltens des Ventils herangezogen werden.

Was eine für seine Funktion und Montage optimale Formgestaltung des Steuerkörpers betrifft, so kann dieser bevorzugt zur Lagerung entgegengesetzt konvergierend ausgebildete kegelige Endbereiche aufweisen und jeweils mit einer zylindrischen und/oder konischen stufenförmigen Andrehung an seinen axialen Enden versehen sein, die der Fixierung bei der Montage und der Montagekontrolle und Sicherheit dienen.

Die Enden des Schlauchstückes können, insbesondere über Halteelemente, wie Ringnuten, an ringförmigen Haltewülsten des Schlauchstücks sowie über form- und oder kraftschlüssig wirkende Halteelemente des Steuerkörpers, die vorzugsweise auf seinen kegeligen Endbereiche angeordnet sind, am Steuerkörper und in ähnlicher Weise auch am Gehäuse befestigt und zwischen dem Steuerkörper und dem Gehäuse verklemmt werden.

Das Gehäuse, in dem die Schlauchenden befestigt werden, kann mit Vorteil mindestens zwei Teile, wie zwei Gehäusehälften, umfassen, die form- und/oder kraftschlüssig miteinander, insbesondere steckend, aber zusätzlich oder alternativ auch durch Rasten, Verschrauben und/oder Bördeln verbindbar sind. Das Schlauchstück kann auf diese Weise verdrehsicher und torsionsfrei im Gehäuse montiert werden.

Damit kein Überdruck im Falle einer Leckage entsteht, kann ein druckloser, das Schlauchstück umgebender Gehäuseraum durch Belüftungsöffnungen von außen belüftet werden, so dass frei werdendes Fluid aus dem Gehäuse entweichen kann.

Durch die unter Vorspannung erfolgende Halterung des Steuerkörpers im Schlauchstück erfährt das Schlauchstück bereichsweise eine Aufweitung. Damit die Enden des Schlauchstücks von dieser Aufweitung unbeeinflußt bleiben, kann das Schlauchstück eine auf den Durchmesser des Steuerkörpers abgestimmte Mindestlänge aufweisen.

Weitere vorteilhafte Ausgestaltungsmerkmale der Erfindung sind in den Unteransprüchen sowie der folgenden Beschreibung enthalten.

Anhand zweier bevorzugter Ausführungsbeispiele soll im folgenden die Erfindung näher erläutert werden. Dabei zeigen:
- Fig. 1: eine Teildarstellung einer ersten Ausführung eines erfindungsgemäßen Restdruckventils in einem axialen Halbschnitt,
- Fig. 2 und 3: axiale Halbschnitte durch die in Fig. 1 dargestellten Gehäuseteile eines erfindungsgemäßen Restdruckventils in einem Zustand vor ihrer Montage,
- Fig. 4: einen Längsschnitt durch einen sowohl bei der ersten, als auch bei der zweiten Ausführung eines erfindungsgemäßen Restdruckventils eingesetzten Steuerkörpers,
- Fig. 5: eine Fig. 5 entsprechende, ungeschnittene Darstellung des Steuerkörpers eines erfindungsgemäßen Restdruckventils,
- Fig. 6: eine Querschnittsdarstellung des Steuerkörpers eines erfindungsgemäßen Restdruckventils bei einem Schnitt entlang der Linie VI-VI in Fig. 5,
- Fig. 7: eine Querschnittsdarstellung einer ersten Ausführung einer Federschelle eines erfindungsgemäßen Restdruckventils,
- Fig. 8: eine Seitenansicht einer zweiten Ausführung einer Federschelle eines erfindungsgemäßen Restdruckventils,
- Fig. 9: eine Gesamtansicht der in Fig. 1 dargestellten ersten Ausführung eines erfindungsgemäßen Restdruckventils, jedoch in verkleinertem Maßstab,
- Fig. 10: eine Fig. 9 von der Darstellung her entsprechende, zweite Ausführung eines erfindungsgemäßen Restdruckventils,
- Fig. 11: ist ein Längsschnitt durch ein erfindungsgemäßes Restdruckventil, und zwar in der oberen Hälfte, dargestellt mit eingesetztem Schlauchstück und in der unteren Hälfte, dargestellt ohne Schlauchstück,
- Fig. 12: ist ein Längsschnitt durch ein erfindungsgemäßes Schlauchstück gemäß Fig. 11 und
- Fig. 13: ist ein Längsschnitt durch eine alternative Ausführungsform eines erfindungsgemäßen Schlauchstückes.

In den Zeichnungsfiguren sind gleiche und einander entsprechende Teile stets mit den gleichen Bezugszeichen versehen, so dass sie in der Regel auch nur einmal beschrieben werden.

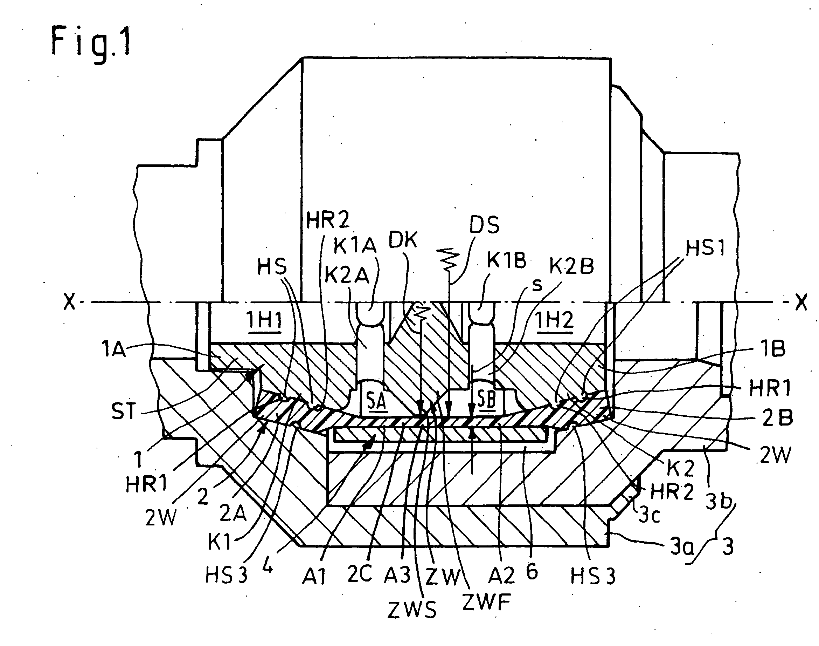

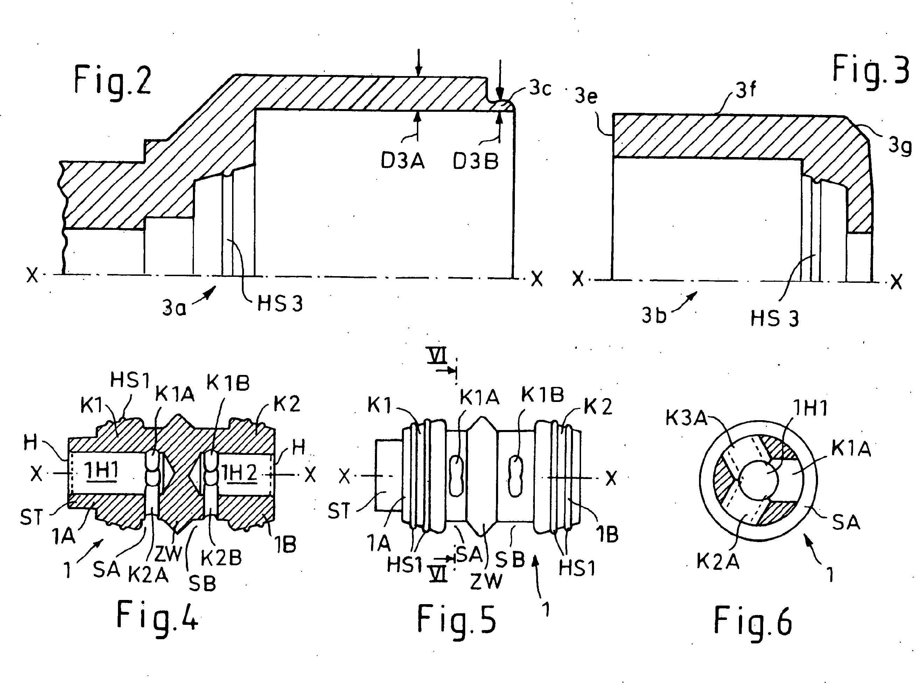

Wie sich zunächst aus Fig. 1 ergibt, umfaßt eine erste Ausführung eines erfindungsgemäßen Restdruckventils, ein sogenanntes Restdruckhalteventil für Luftfedersysteme, die zur besseren Veranschaulichung in den Fig. 2 bis 9 in verschiedenen Ansichten - auch ihrer Einzelteile - dargestellt ist, einen Ventilkörper und einen Ventilsitz. Der Ventilkörper ist durch einen hinsichtlich seiner Längsachse mit axialsymmetrischem Querschnitt ausgebildeten Steuerkörper 1 und der Ventilsitz durch ein aus einem Elastomer bestehendes Schlauchstück 2 gebildet, das in einem Gehäuse 3 befestigt ist. Die Enden 2A, 2B des Schlauchstückes 2 sind dabei zwischen dem Steuerkörper 1 und dem Gehäuse 3 verklemmt.

Das Gehäuse 3 umfaßt insbesondere mindestens zwei Gehäuseteile 3a, 3b, die als Einzelteile in Fig. 2 und 3 dargestellt sind und form- und/oder kraftschlüssig miteinander verbindbar sind. Die gegenseitige Verbindung kann dabei bevorzugt in montagetechnisch einfacher Weise durch ein Stecken und - wie bei der ersten Ausführung gezeigt - durch ein Verbördeln, insbesondere über eine an einem Gehäuseteil 3a ausgebildete Bördelkante 3c, erfolgen. Die Bördelkante 3c, die durch einen stirnseitig endständigen umlaufenden Steg mit gegenüber der Wandstärke D3A des Gehäuseteils 3a reduzierter mittlerer Dicke D3B gebildet wird, ist - in noch ungebördeltem Zustand - Fig. 2 besonders deutlich zu entnehmen

Wie des Weiteren Fig. 1 zeigt, wird der Steuerkörper 1 außer durch das Schlauchstück 2 auch durch eine das Schlauchstück 2 umfangsgemäß umgebende Feder 4, vorzugsweise eine Federschelle umfaßt. Das Schlauchstück 2 und die Federschelle 4 umgeben den Steuerkörper 1 unter elastischer Vorspannung, wodurch es in einem mittleren Bereich, in dem der Steuerkörper 1 sitzt, eine umfangsgemäße Aufweitung 2C aufweist. Hierbei kann ein gewünschter Ansprechdruck des erfindungsgemäßen Ventils dadurch eingestellt werden, dass eine vorherbestimmte Vorspannung durch eine Abstimmung eines mittleren Durchmessers DS und der Wandstärke s des Schlauchstücks 2 im unverspannten Zustand unter Beachtung der Elastizität des Schlauchmaterials auf einen Durchmesser DK des Steuerkörpers 1 eingestellt ist. Das Schlauchstück 2 kann eine derart auf den Durchmesser DK des Steuerkörpers 1 abgestimmte, nicht näher bezeichnete Mindestlänge aufweisen, dass die Enden 2A, 2B des Schlauchstücks 2 von der Aufweitung 2C des Schlauchstücks 2 durch den Steuerkörper 1 unbeeinflußt bleiben. Zusätzlich - oder nahezu auch nur ausschließlich - kann die vorherbestimmte elastische Vorspannung mit Hilfe der das Schlauchstück 2 umfangsgemäß umgebenden Feder 4 - und zwar durch deren Geometrie und Kennlinie - eingestellt werden.

Das Schlauchstück 2 kann zur besseren Montage und zum sicheren Betrieb mit einer reibungsminimierenden Schicht, z. B. aus PTFE-Gleitlack versehen sein. Diese reibungsmindernde Schicht kann einseitig oder auch beidseitig aufgetragen werden.

Wie Fig. 1 sowie Fig. 4 bis 6 zu entnehmen ist, weist der Steuerkörper 1 des erfindungsgemäßen Restdruckventils eine zylindrische, faßartige oder bikonische Grundform auf, wobei von jedem seiner axialen Enden 1A, 1B ausgehend jeweils ein Hohlraum 1H1, 1H2 gebildet ist. Jeder der Hohlräume 1H1, 1H2 steht jeweils über mindestens einen radial gerichteten Kanal mit einer ringförmigen bzw. umlaufenden Steuerkammer SB, SA in Verbindung. Radiale Querbohrung bedeutet hierbei einen Verlauf der Querbohrung unter einem Winkel von ca. 45 ° bis einschließlich 90 ° zur Längsachse X-X. Wie Fig. 6 zeigt, sind in der dargestellten bevorzugten Ausführung jeweils drei, gegeneinander um jeweils 120° versetzte, als radiale, unter einem Winkel von 80 ° verlaufende Querbohrungen ausgebildete Kanäle K1A, K2A, K3A, K1B, K2B, K3B vorgesehen. Diese ringförmigen Steuerkammern SA, SB sind als umlaufende Nuten in der Außenfläche des Steuerkörpers 1 angeordnet und von der jeweils anderen Steuerkammer SB, SA durch eine am Schlauchstück 2 anliegende radiale Zwischenwand ZW getrennt. Die Zwischenwand ZW besitzt einen breiten Fuß ZWF und konvergiert in radialer Richtung auf eine Spitze ZWS hin, die oberseitig abgeflacht bzw. leicht verrundet ist. Die peripheren Wände der Steuerkammern SA, SB werden dabei jeweils durch Abschnitte A1, A2 des Schlauchstücks 2 gebildet. Die Hohlräume 1H1, 1H2 sind in fertigungstechnisch einfacher Ausführung durch von den axialen Enden 1A, 1B des Steuerkörpers 1 ausgehende Sackbohrungen gebildet. Die Steuerkammern SA, SB weisen eine unterschiedliche Größe auf, wobei insbesondere die Steuerkammer SB hinsichtlich des peripher anliegenden Abschnitts A2 des Schlauchstücks 2 auf einer Füllseite größer ausgeführt ist als die Steuerkammer SA hinsichtlich des peripher anliegenden Abschnitts A1 des Schlauchstücks 2 auf einer Restdruckseite, so dass die Steuerkammer SB eine größere wirksame Druckfläche am umgebenden Schlauchstück 2 ausbildet als die Steuerkammer SA.

Wenn ein Medium unter Fülldruck von der Füllseite (Seite des Gehäuseteils 3b bzw. des Endes 1B des Steuerkörpers) her in das erfindungsgemäße Restdruckventil einströmt, gelangt es durch den auf der Füllseite angeordneten Hohlraum 1H2 durch die radial gerichteten Kanäle K1B, K2B, K3B (vgl. Fig. 1, K3B ist figürlich nicht dargestellt) in die erste, insbesondere im Vergleich mit der anderen größere, Steuerkammer SB. Die umschließende Schlauchfläche - Abschnitt A2 des Schlauchstücks 2 - wird dabei mit einem Fülldruck beaufschlagt. Solange ein vorherbestimmter Ansprechdruck nicht erreicht ist, blockiert die die Steuerkammer SB im Bereich des Abschnitts A2 umschließende Schlauchfläche den Durchfluß des Fluids.

Der Ansprechdruck ist dabei weniger durch eine vorherbestimmte Vorspannung des Schlauchstücks 2 eingestellt, als vielmehr mit Hilfe der das Schlauchstück 2 umfangsgemäß umgebenden Federschelle 4. Der Druck wirkt also gegen die durch das Schlauchstück 2 erzeugte Vorspannung und vor allem gegen die vergleichsweise höhere Vorspannung durch die Federkraft der Federschelle 4.

Wenn der Druck des Fluids den Ansprechdruck erreicht, wird das Schlauchstück 2 durch die Druckbeaufschlagung derart radial gedehnt, dass sich ein zwischen den beiden an den Steuerkammern SA, SB befindlichen Abschnitten A1, A2 liegender Abschnitt A3 des Schlauchstücks 2, welcher zunächst an der Zwischenwand ZW anliegt, von dieser abhebt. Hierdurch öffnet sich für das Fluid ein Überströmweg zur Steuerkammer SA auf der Restdruckseite öffnet. Ist der Fülldruck erreicht, schaltet die Druckquelle ab. Die Steuerkammer SB wird drucklos, das Schlauchstück 2, insbesondere dessen Abschnitt A3, geht in die Ausgangsstellung zurück. Insbesondere durch die abgeflachte bzw. verrundete Form der Spitze ZWS der Zwischenwand ZW paßt sich im Ruhezustand der Abschnitt A3 ohne die Gefahr einer Zerstörung eng und dicht schließend an die Außenkontur des Steuerkörpers 1 an. Der in der Steuerkammer SA auf der Restdruckseite erhaltene Restdruck - beispielsweise in einer Höhe von bis zu 6 bar - kann nun seinerseits aber das Ventil nicht öffnen, d.h. das Schlauchstück in seinem Abschnitt A3 von der Zwischenwand ZW abheben, weil die druckbeaufschlagte Schlauchfläche im entsprechenden Abschnitt A1 zu klein dafür ist.

Der Steuerkörper 1 weist für seine Lagerung entgegengesetzt konvergierend ausgebildete kegelige Endbereiche K1, K2 auf. Außerdem ist zur Montage des Steuerkörpers 1, insbesondere als axialer Abschluß seines kegeligen Endbereiches K1 an seinem Ende 1A auf der Restdruckseite eine stufenförmige Andrehung ST vorgesehen.

Das Schlauchstück 2 kann mit Vorteil verdrehfest und torsionsfrei im Gehäuse 3 montiert sein, wobei die Enden 2A, 2B des Schlauchstückes 2, insbesondere über Halteelemente HR1, wie Ringnuten, die an ringförmigen Haltewülsten 2W des Schlauchstücks 2 ausgebildet sind, sowie über korrespondierende form- und oder kraftschlüssig wirkende Halteelemente HS1 des Steuerkörpers 1, die vorzugsweise auf seinen kegeligen Endbereichen K1, K2 angeordnet sind, am Steuerkörper 1 befestigt sind. Des Weiteren kann neben der bereits oben beschriebenen Klemmung des Schlauchstücks 2 vorgesehen sein, dass die Enden 2A, 2B des Schlauchstückes 2, insbesondere über Halteelemente HR2, wie Ringnuten, die ebenfalls an den ringförmigen Haltewülsten 2W des Schlauchstücks 2 ausgebildet sind, sowie korrespondierende form- und oder kraftschlüssig wirkende Halteelemente HS3 des Gehäuses 3, wie umlaufende Vorsprünge (siehe insbesondere Fig. 2 und 3), am Gehäuse 3 befestigt sind.

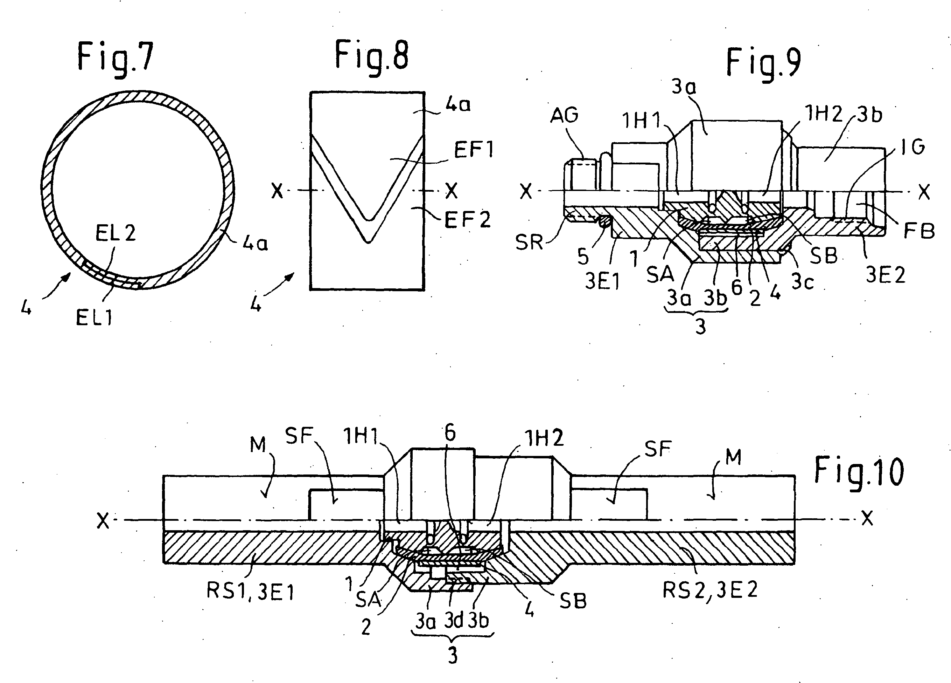

Die Federschelle 4 kann wie Fig. 7 und 8 veranschaulichen in unterschiedlichen Formen ausgeführt sein. So zeigt Fig. 7 eine Ausführung, bei der sich Endbereiche EL1, EL2 eines ringförmig gebogenen, vorzugsweise aus Federstahl gefertigten Federbandes 4a überlappen und Fig. 8 eine Ausführung bei dem die Endbereiche EF1, EF2 eines solchen Federbandes 4a formschlüssig - im Detail in der gezeigten Ausführung V-förmig - ineinander greifen. Beide Ausführungen gewährleisten eine optimal gleichmäßige Druckausübung der Federschelle 4 auf das von ihr umschlossene Schlauchstück 2.

Das aus den Gehäuseteilen 3a und 3b bestehende Gehäuse 3 kann weiterhin dahingehend ausgebildet sein, dass als Belüftungsöffnung in den Flächen 3e, 3f, 3g, siehe Fig. 3 oder deren Komplementärflächen im Teil 3a ein Leckagepfad vorgesehen ist. Die Ausbildung des Leckagepfades erfolgt im Bereich der Flächen 3e und 3g, vorzugsweise durch eine Rändelung und im Bereich der Fläche 3f durch angeschlagene Flächen wie z. B. Schlüsselflächen.

Weiterhin kann erfindungsgemäß vorgesehen sein, dass an den axialen Enden der Hohlräume 1H1 und 1H2 Siebe H angeordnet sind, siehe Fig. 4. Durch die Anordnung der Siebe H werden die Hohlräume 1H1 und 1H2 und die Kanäle K1A, K2A, K3A, K1B, K2B und K3B sowie die Steuerkammern SA und SB, die Zwischenwand ZW sowie das Schlauchstück 2 frei von störenden Schmutzpartikeln gehalten.

Die in Fig. 9 dargestellte Gesamtansicht der in Fig. 1 partiell dargestellten ersten Ausführung eines erfindungsgemäßen Restdruckventils zeigt, dass axiale Enden 3E1, 3E2 des Gehäuses 3 unterschiedlich ausgebildet sind, wobei insbesondere ein Ende 3E2 zur Ausbildung als Steckeraufnahme eine Formbohrung FB besitzt und das andere Ende 3E1 als Stecker mit einem Dichtungsring 5, ausgeführt ist. Ein axiales Ende 3E2 des Gehäuses 3, vorzugsweise auf seiner Füllseite, weist ein Innengewinde IG auf, während das andere axiale Ende 3E1, vorzugsweise auf der Restdruckseite, ein Außengewinde AG aufweist. Das restdruckseitige Ende 3E1 des Gehäuses 3 ist als Stutzen SR ausgebildet.

Die in Fig. 10 dargestellte zweite Ausführung der Erfindung besitzt den gleichen prinzipiellen Aufbau wie die erste Ausführung. Im Unterschied dazu sind jedoch die axialen Enden 3E1, 3E2 des Gehäuses 3 des erfindungsgemäßen Restdruckventils gleichartig, und zwar als Rohrstücke RS1, RS2 ausgebildet, wobei die Gehäuseteile 3a, 3b über eine Schraubverbindung 3d zusammengefügt sind. In der Außenmantelfläche M des Gehäuses 3, insbesondere in den Außenmantelflächen M beider Gehäuseteile 3a, 3b, sind zur Erleichterung der Montage Schlüsselflächen SF für den Angriff eines Werkzeugs ausgebildet.

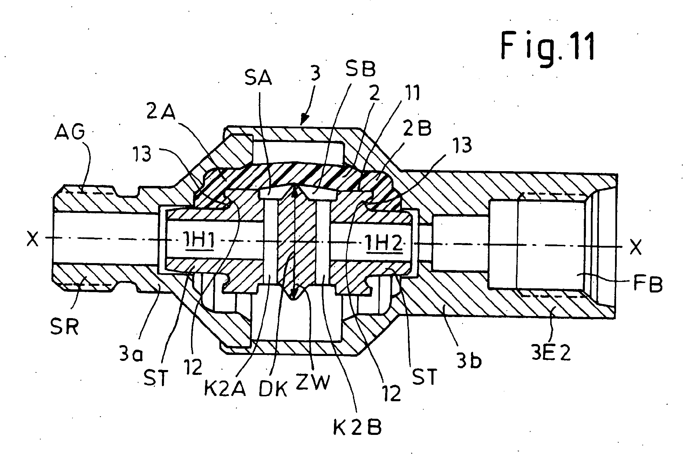

In Fig. 11 ist eine weitere Ausführungsform eines erfindungsgemäßes Restdruckventils dargestellt, wobei gleiche bzw. funktionsgleiche Teile wie in den Figuren 1 bis 10 mit denselben Bezugskennzeichnungen versehen sind.

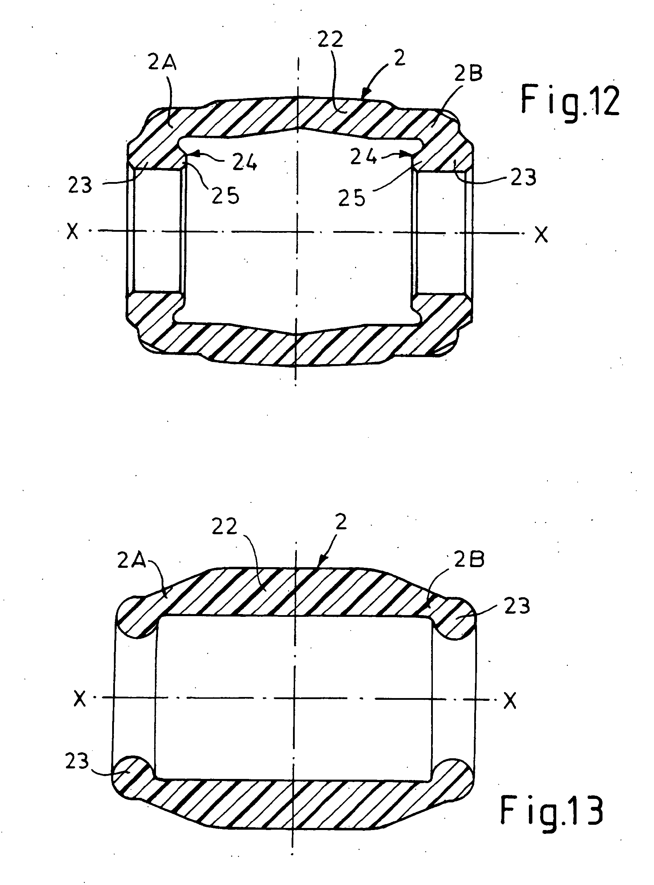

Das Schlauchstück 2 ist hierbei als Formschlauch ausgebildet, siehe Fig. 12, mit einem im wesentlichen hohlzylindrischen Mittelteil 22, an dessen beiden Enden radial nach innen abgewinckelte ringförmige Dichtwulste 23 angeformt sind. Diese Dichtwulste 23 besitzen an ihrer Innenseite 24 eine Dichtkontur mit einem axial nach innen ragenden Dichtabschnitt 25, der einen teilkreisförmigen Querschnitt aufweist. Hierdurch wird eine O-ringartige Dichtkontur gebildet. An der dem Dichtabschnitt 25 gegenüberliegenden Ausseite des Dichtwulstes 23 ist dieser abgeflacht dargestellt. Jedoch kann er auch konvex gekrümmt sein.

Das Schlauchstück 2 ist mit seinen Endbereichen und den Dichtwulsten 23 zwischen den Gehäuseteilen 3a, 3b des Gehäuses 3 und dem Steuerkörper 1 form- und kraftschlüssig eingespannt. Der Steuerkörper 1 weist beidseitig seiner Steuerkammern SB, SA einen zylinderförmigen Abschnitt 11 auf, dessen Außendurchmesser kleiner ist als der Außendurchmesser DK der Zwischenwand ZW. In seinen radial verlaufenden äußeren Stirnwänden 12 sind in diesen im Querschnitt teilkreisförmige Ringnuten 13 ausgebildet, die die Dichtabschnitte 25 der Dichtwulste 23 aufnehmen, so dass sich die Dichtfunktion eines O-rings in diesem Bereich ergibt. An die Stirnwände 12 schließen sich jeweils die stufenförmigen zylindrischen Andrehungen ST an, die einen kleineren Außendurchmesser als die Abschnitte 11 besitzen, die in entsprechende zylindrische Bohrungsabschnitte der Gehäuseteile 3a, 3b hineinragen, so dass die Dichtwulste 23 eingekammert sind.

Insgesamt ergibt sich somit durch die Dichtwulste 23 in Verbindung mit der formmäßigen Anpassung der Konturen von Steuerkörper 1 und Gehäuse 3 eine optimierte Dicht- und Haltefunktion des erfindungsgemäßen Steuerventils.

In Fig. 13 ist eine abgeänderte Ausführung eines Schlauchstücks 2 zu demjenigen gemäß Fig. 12 dargestellt. Dieses Schlauchstück 2 weist ausgehend von seinem hohlzylindrischen Mittelteil 22 zwei am äußeren Umfange sich konisch verjüngende Endabschnitte auf, an deren Enden im Querschnitt kreisförmige Dichtwulste 23 angeformt sind, so dass sich eine O-ringartige Ausbildung in diesem Bereich ergibt. Durch eine den Endabschnitten und den Dichtwulsten 23 angepasste Außenkontur und Innenkontur von Steuerkörper 1 und Gehäuseteilen 3a, 3b wird das Schlauchstück 2 form- und kraftschlüssig eingeklemmt, wobei die Dichtwulste 23 eine O-ringdichtung bewirken.

Wie bereits die möglichen Unterschiede in den dargestellten Ausführungen zeigen, ist das erfindungsgemäße Ventil mit seiner vorteilhaft kompakten, in der Fertigung einfachen und materialsparenden sowie montagefreundlichen Bauweise und sicheren sowie präzisen Funktion, nicht auf die beschriebenen Ausführungsbeispiele beschränkt, sondern umfaßt auch alle im Sinne der Erfindung gleichwirkenden Ausführungen. So wäre es z.B. möglich, anstelle des dargestellten Steuerkörpers 1 auch ein Rotationsellipsoid zu verwenden, ohne dass der Rahmen der Erfindung verlassen wird. Die Enden 3E1, 3E2 des Gehäuses 3 können bedarfsweise in Abweichung zu den dargestellten Ausführungen mit Verbindungsmitteln für eine Verrastung versehen sein. An mindestens einem Gehäuseteil 3a, 3b, vorzugsweise an beiden Gehäuseteilen 3a, 3b könnten Haltearme - mindestens zwei, vorzugsweise drei - für das jeweils andere Gehäuseteil ausgebildet sein. Das Gehäuse 3 kann - wie dargestellt - auch einen drucklosen, das Schlauchstück 2 und die Federschelle 4 umgebenden Gehäuseraum 6 umfassen, der über Belüftungsöffnungen (nicht gezeigt) von außen belüftet ist. Dadurch wird bei Leckage die Bildung eines gefahrdrohenden Überdrucks im Gehäuse 3 vermieden.

### Bezugszeichen

- 1: Steuerkörper
- 1A, 1B: Enden von 1
- 1H1: Hohlraum in 1A
- 1H2: Hohlraum in 1B
- 2: Schlauchstück
- 2A, 2B: Enden von 2
- 2C: Aufweitung von 2
- 2W: Haltewulst von 2
- 3: Gehäuse
- 3a, 3b: Gehäuseteile von 3
- 3c: Bördelkante von 3 (erste Ausführung)
- 3d: Schraubverbindung von 3 (zweite Ausführung)
- 3e, 3f, 3g: Flächen des Teils 3b
- 3E1, 3E2: axiale Enden von 3
- 4: Feder
- 4a: Federband von 4
- 5: Dichtungsring
- 6: Gehäuseraum um 2, 4
- 11: zylindrischer Abschnitt
- 12: Stirnwände
- 22: Mittelteil
- 23: Dichtwulst
- 24: Innenseite
- 25: Dichtabschnitt

- A1: Abschnitt von 2 bei SA
- A2: Abschnitt von 2 bei SB
- A3: Abschnitt von 2 bei ZW
- AG: Außengewinde von 3E1, erste Ausführung
- D3A: Wandstärke von 3a
- D3B: Wandstärke von 3c
- DK: mittlerer Durchmesser von 1, im Bereich von ZW
- DS: Durchmesser von 2

- EL1, EL2: Endbereiche von 4 (erste Ausführung)
- EF1, EF2: Endbereiche von 4 (zweite Ausführung)
- FB: Formbohrung in 3E1
- H: Siebe
- HR1: Halteelemente von 2 für 1
- HR2: Halteelemente von 2 für 3
- HS1: Halteelemente von 1 für 2
- HS3: Halteelemente von 3 für 2
- 1H1: Hohlräume
- 1H2: Hohlräume
- IG: Innengewinde von 3E2, erste Ausführung
- K1, K2: kegelige Endbereiche von 1
- K1A, K2A, K3A: radiale Kanäle in 1, von 1H1 zu SA
- K1B, K2B, K3B: radiale Kanäle in 1, von 1H2 zu SB
- M: Mantelfläche von 1
- RS1, RS2: Rohrstücke (3E1, 3E2), zweite Ausführung
- s: Wandstärke von 2
- SA: Steuerkammer, Restdruckseite
- SB: Steuerkammer, Füllseite
- SF: Schlüsselflächen
- SR: Stutzen (3E1), erste Ausführung
- ST: stufenförmige Andrehung von 1
- X-X: Längsachse
- ZW: Zwischenwand

## Patentansprüche

1. Restdruckventil mit einem Ventilkörper und einem Ventilsitz, wobei der Ventilsitz durch ein in einem Gehäuse (3) befestigtes, aus einem Elastomer bestehendes Schlauchstück (2) gebildet ist, das den Ventilkörper unter elastischer Vorspannung umgibt, und wobei der Ventilkörper durch einen axialsymmetrischen Steuerkörper (1) gebildet ist, der eine zylindrische, fassartige oder bikonische Grundform aufweist und von jedem seiner axialen Enden (1A, 1B) ausgehend jeweils einen Hohlraum (1H1, 1H2) aufweist, der über mindestens einen Kanal (K1A, K2A, K3A, K1B, K2B. K3B) jeweils mit einer ringförmigen Steuerkammer (SA, SB) in Verbindung steht, die in der Außenfläche des Steuerkörpers (1) angeordnet und von der jeweils anderen Steuerkammer (SB, SA) durch eine am Schlauchstück (2) anliegende radiale Zwischenwand (ZW) getrennt ist,
**dadurch gekennzeichnet, dass** die Steuerkammern (SA, SB) eine derart unterschiedliche Größe aufweisen, dass eine Steuerkammer (SB) eine größere wirksame Druckfläche gegenüber dem Schlauchstück (2) aufweist als die andere Steuerkammer (SA).

2. Restdruckventil nach Anspruch 1,
**dadurch gekennzeichnet, dass** die Steuerkammer (SB) auf einer Füllseite größer ausgeführt ist bzw, eine größere Druckfläche aufweist als die Steuerkammer (SA) auf einer Restdruckseite und insbesondere die Kanäle (K1A. K2A, K3A, K1B, K2B, K3B) radial unter einem Winkel von 45 ° bis 90 °, vorzugsweise unter einem Winkel von 80 °, verlaufen.

3. Restdruckventil nach Anspruch 1 oder 2,
**dadurch gekennzeichnet, dass** eine vorherbestimmte Vorspannung durch eine Abstimmung des Durchmessers (DS) und der Wandstärke (s) des Schlauchstücks (2) im unverspannten Zustand unter Beachtung der Elastizität des Schlauchmaterials auf einen mittleren Durchmesser (DK) des Steuerkörpers (1), insbesondere im Bereich von dessen Zwischenwand (ZW), eingestellt ist.

4. Restdruckventil nach einem der Ansprüche 1 bis 3,
**dadurch gekennzeichnet, dass** eine vorherbestimmte Vorspannung mit Hilfe einer das Schlauchstück (2) umfangsgemäß umgebenden Feder (4) eingestellt ist.

5. Restdruckventil nach einem der Ansprüche 1 bis 4,
**dadurch gekennzeichnet, dass** die Hohträume(1H1,1H2) durch von den axialen Enden (1 A, 1 B) des Steuerkörpers (1) ausgehende Sackbohrungen gebildet sind.

6. Restdruckventil nach einem der Ansprüche 1 bis 5,
**dadurch gekennzeichnet, dass** zur Verbindung der Hohlräume (1H1, 1 H2) mit den Steuerkammern (SA, SB) jeweils drei, gegeneinander um jeweils 120° versetzte, als unter einem Winkel von 90 ° verlaufende, radiale Querbohrungen ausgebildete Kanäle (K1A, K2A, K3A, K1B, K2B. K3B) vorgesehen sind.

7. Restdruckventil nach einem der Ansprüche 1 bis 6,
**dadurch gekennzeichnet, dass** das Schlauchstück (2) verdrehfest und torsionsfrei im Gehäuse (3) montiert ist.

8. Restdruckventil nach einem der Ansprüche 1 bis 7,
**dadurch gekennzeichnet, dass** das Schlauchstück (2) als Formschlauch ausgebildet ist, an dessen beiden Endbereichen wulstartige, umlaufende Dicht- und Halteelemente (23) ausgeformt sind, die in entsprechenden zwischen dem Steuerkörper (1) und dem Gehäuse (3) ausgebildeten Kammern unter Verformung dichtend gehalten sind.

9. Restdruckventil nach Anspruch 8,
**dadurch gekennzeichnet, dass** die Dicht- und Haltelemente (23) ganz oder teilweise O-ringartig ausgebildet sind

10. Restdruckventil nach einem der Ansprüche 1 bis 9,
**dadurch gekennzeichnet, dass** das Schlauchstück (2) axial symmetrisch oder asymmetrisch ausgebildet ist.

11. Restdruckventil nach einem der Ansprüche 1 bis 10,
**dadurch gekennzeichnet, dass** der Steuerkörper (1) zur Lagerung entgegengesetzt konvergierend ausgebildete kegelige Endbereiche (K1, K2) aufweist.

12. Restdruckventil nach einem der Ansprüche 1 bis 11,
**dadurch gekennzeichnet, dass**dieEnden(2A,2B)des Schlauchstückes (2), insbesondere über Halteelemente (HR1), wie Ringnuten, die an ringförmigen Haltewülsten (2W) des Schlauchstücks (2) ausgebildet sind, sowie über form- und/oder kraftschlüssig wirkende Halteelemente (HS1) des Steuerkörpers (1), die vorzugsweise auf seinen kegeligen Endbereichen (K1, K2) angeordnet sind, am Steuerkörper (1) befestigt sind.

13. Restdruckventil nach einem der Ansprüche 1 bis 12,
**dadurch gekennzeichnet, dass**dieEnden(2A,2B)des Schlauchstückes (2), insbesondere über Halteelemente (HR2), wie Ringnuten, die an den ringförmigen Haltewülsten (2W) des Schlauchstücks (2) ausgebildet sind, sowie form- und oder kraftschlüssig wirkende Halteelemente (HS3) des Gehäuses (3) am Gehäuse (3) befestigt sind.

14. Restdruckventil nach einem der Ansprüche 1 bis 13,
**dadurch gekennzeichnet, dass**dieEnden(2A,2B)des Schlauchstückes (2), zwischen dem Steuerkörper (1) und dem Gehäuse (3) verklemmt sind.

15. Restdruckventil nach einem der Ansprüche 1 bis 14,
**dadurch gekennzeichnet, dass** der Steuerkörper (1) zur Montage, insbesondere als axialen Abschluß eines kegeligen Endbereiches (K1), an mindestens einem Ende (1A) eine stufenförmige Andrehung (ST) aufweist.

16. Restdruckventil nach einem der Ansprüche 1 bis 15,
**dadurch gekennzeichnet, dass** das Gehäuse (3) aus mindestens zwei Gehäuseteilen (3a, 3b) besteht, die form- und/oder kraftschlüssig miteinander verbindbar sind.

17. Restdruckventil nach Anspruch 16,
**dadurch gekennzeichnet, dass** die Gehäuseteile (3a, 3b) steckend miteinander verbindbar sind.

18. Restdruckventil nach Anspruch 16,
**dadurch gekennzeichnet, dass** die Gehäuseteile (3a, 3b) durch Verbördeln, insbesondere über eine an einem Gehäuseteil (3a) ausgebildete Bördelkante (3c), miteinander verbindbar sind.

19. Restdruckventil nach Anspruch 16,
**dadurch gekennzeichnet, dass** die Gehäuseteile (3a, 3b) über eine Schraubverbindung (3d) miteinander verbindbar sind.

20. Restdruckventil nach Anspruch 16,
**dadurch gekennzeichnet, dass** die Gehäuseteile (3a, 3b) durch Verrastung miteinander verbindbar sind.

21. Restdruckventil nach einem der Ansprüche 16 bis 20,
**dadurch gekennzeichnet, dass** an mindestens einem Gehäuseteil (3a, 3b), vorzugsweise an beiden Gehäuseteilen (3a, 3b), mindestens zwei, vorzugsweise drei, Haltearme für das jeweils andere Gehäuseteil (3b, 3a) ausgebildet sind.

22. Restdruckventil nach einem der Ansprüche 1 bis 21,
**dadurch gekennzeichnet, dass** das Gehäuse (3) einen drucklosen, das Schlauchstück (2) umgebenden Gehäuseraum (6) umfaßt, der über Belüftungsöffnungen von außen belüftet ist.

23. Restdruckventil nach einem der Ansprüche 1 bis 22,
**dadurch gekennzeichnet, dass** das Schlauchstück (2) eine derart auf den Durchmesser (DK) des Steuerkörpers (1) abgestimmte Mindestlänge aufweist, dass die Enden (2A, 2B) des Schlauchstücks (2) von einer Aufweitung (2c) des Schlauchstücks (2) durch den Steuerkörper (1) unbeeinflußt sind.

24. Restdruckventil nach einem der Ansprüche 1 bis 23,
**dadurch gekennzeichnet, dass** axiale Enden (3E1, 3E2) des Gehäuses (3) unterschiedlich ausgebildet sind, wobei insbesondere ein Ende (3E2) zur Ausbildung als Steckeraufnahme eine Formbohrung (FB) besitzt und das andere Ende (3E1) als Stecker, gegebenenfalls mit einem Dichtungsring (5), ausgeführt ist.

25. Restdruckventil nach einem der Ansprüche 1 bis 23,
**dadurch gekennzeichnet, dass** ein axiales Ende (3E2) des Gehäuses (3), vorzugsweise an einer Füllseite des Gehäuses (3), ein Innengewinde (IG) aufweist und ein axiales Ende (3E1) des Gehäuses (3), vorzugsweise an einer Restdruckseite des Gehäuses (3), ein Außengewinde (AG) aufweist.

26. Restdruckventil nach einem der Ansprüche 1 bis 25,
**dadurch gekennzeichnet, dass** an axialen Enden der Hohlräume (1H1, 1H2) zum Auffangen von Schmutzpartikeln Siebe (H) angeordnet sind.

27. Restdruckventil nach einem der Ansprüche 1 bis 26,
**dadurch gekennzeichnet, dass** in Umfangsflächen (3e,3f,3g) des Gehäuseteils (3b) des Gehäuses (3) Belüftungsöffnungen als Leckagepfad ausgebildet sind und/oder in den zu den vorstehenden Umfangsflächen (3e, 3f, 3g) komplementären Flächen des Gehäuseteils (3a).

28. Restdruckventil mit einem Ventilkörper und einem Ventilsitz, wobei der Ventilsitz durch ein in einem Gehäuse (3) befestigtes, aus einem Elastomer bestehendes Schlauchstück (2) gebildet ist, das den Ventilkörper unter elastischer Vorspannung umgibt, und wobei der Ventilkörper durch einen axialsymmetrischen Steuerkörper (1) gebildet ist, der eine zylindrische, fassartige oder bikonische Grundform aufweist und von jedem seiner axialen Enden (1A, 1B) ausgehend jeweils einen Hohlraum (1H1, 1H2) aufweist, der über mindestens einen Kanal (K1A, K2A, K3A, K1B, K2B. K3B) jeweils mit einer insbesondere ringförmigen Steuerkammer (SA, SB) in Verbindung steht, die in der Außenfläche des Steuerkörpers (1) angeordnet und von der jeweils anderen Steuerkammer (SB, SA) durch eine am Schlauchstück (2) anliegende radiale Zwischenwand (ZW) getrennt ist, wobei eine vorherbestimmte Vorspannung mit Hilfe einer das Schlauchstück (2) umfangsgemäß umgebenden Feder (4) eingestellt ist,
**dadurch gekennzeichnet, dass** die Steuerkammern (SA, SB) eine derart unterschiedliche Größe aufweisen, dass eine Steuerkammer (SB) eine größere wirksame Druckfläche gegenüber dem Schlauchstück (2) aufweist als die andere Steuerkammer (SA).

29. Restdruckventil nach Anspruch 28 sowie nach einem oder mehreren der Kennzeichen der Ansprüche 2, 3, 4 bis 27.

## Claims

1. A residual pressure valve having a valve body and a valve seat, the valve seat being formed by a flexible tubular piece (2) which is fixed in a housing (3), consists of an elastomer and surrounds the valve body under elastic prestress, and the valve body being formed by an axially extending control element (1), wherein the control element (1) has, for example, a cylindrical, barrel-like or biconical basic shape and has a hollow space (1H1, 1H2) in each case starting from each of its axial ends (1A, 1B), which is in each case connected via at least one channel (K1A, K2A, K3A, K1B, K2B, K3B) to an annular control chamber (SA, SB), which is arranged in the outer surface of the control element (1) and is separated from the respective other control chamber (SB, SA) by a radial intermediate wall (ZW) resting on the flexible tubular piece (2), **characterised in that** the control chambers (SA, SB) have a different size such that one control chamber (SB) has a larger effective pressure area as compared with the flexible tubular piece (2) then the other control chamber (SA).

2. The residual pressure valve as claimed in claim 1, **characterised in that** the control chamber (SB) on a filling side being designed to be larger or else to have a larger pressure area than the control chamber (SA) on a residual pressure side and, in particular, the channels (K1A, K2A, K3A, K1B, K2B, K3B) running radially at an angle of 45° to 90°, preferably 80°.

3. The residual pressure valve as claimed in claim 1 or 2, **characterised in that** a predetermined prestress is set by matching the diameter (DS) and the wall thickness (s) of the flexible tubular piece (2) in the unstressed state, taking account of the elasticity of the flexible tube material, to an average diameter (DK) of the control element (1), in particular in the region of its intermediate wall (ZW).

4. The residual pressure valve as claimed in one of claims 1 to 3, **characterised in that** a predetermined prestress is set with the aid of a spring (4) surrounding the flexible tubular piece (2) circumferentially.

5. The residual pressure valve as claimed in one of claims 1 to 4, **characterised in that** the hollow spaces (1H1, 1H2) are formed by blind bores originating from the axial ends (1A, 1B) of the control element (1).

6. The residual pressure valve as claimed in one of claims 1 to 5, **characterised in that**, in order to connect the hollow spaces (1H1, 1H2) to the control chambers (SA, SB), in each case three channels (K1A, K2A, K3A, K1B, K2B, K3B) formed as radial transverse bores running at an angle of 90° and offset by 120° from one another in each case are provided.

7. The residual pressure valve as claimed,in one of claims 1 to 6, **characterised in that** the flexible tubular piece (2) is mounted in the housing (3) so as to be secured against rotation and free of torsion.

8. The residual pressure valve as claimed in one of claims 1 to 7, **characterised in that** the flexible tubular piece (2) is formed as a shaped flexible tube, on whose two ends annular sealing beads (23) are formed and are retained in a sealing manner under deformation in corresponding chambers formed between the control element (1) and the housing (3).

9. The residual pressure valve as claimed in claim 8, **characterised in that** the sealing and retaining elements (23) are formed wholly or partly in the manner of O rings.

10. The residual pressure valve as claimed in one of claims 1 to 9, **characterised in that** the flexible tubular piece (2) is axially symmetrical or asymmetrical.

11. The residual pressure valve as claimed in one of claims 1 to 10, **characterised in that** the control element (1) has oppositely convergent conical end regions (K1, K2) for mounting.

12. The residual pressure valve as claimed in one of claims 1 to 11, **characterised in that** the ends (2A, 2B) of the flexible tubular piece (2) are fixed to the control element (1) in particular via retaining elements (HR1), such as annular grooves, which are formed on annular retaining beads (2W) on the flexible tubular piece (2), and via corresponding form-fitting and/or force-fitting retaining elements (HS1) of the control element (1), which are preferably arranged on its conical end regions (K1, K2).

13. The residual pressure valve as claimed in one of claims 1 to 12, **characterised in that** the ends (2A, 2B) of the flexible tubular piece (2) are fixed to the housing (3) in particular via retaining elements (HR2), such as annular grooves, which are likewise formed on the annular retaining beads (2W) of the flexible tubular piece (2), and corresponding form-fitting and/or force-fitting retaining elements (HS3) of the housing (3).

14. The residual pressure valve as claimed in one of claims 1 to 13, **characterised in that** the ends (2A, 2B) of the flexible tubular piece (2) are clamped between the control element (1) and the housing (3).

15. The residual pressure valve as claimed in one of claims 1 to 14, **characterised in that**, in order to mount the control element (1), in particular as an axial termination of its conical end region (K1) at its end (1A) on the residual pressure side, said control element (1) has a step-like turned portion (ST).

16. The residual pressure valve as claimed in one of claims 1 to 15, **characterised in that** the housing (3) comprises at least two housing parts (3a, 3b), which can be connected to each other with a form and/or force fit.

17. The residual pressure valve as claimed in claim 16, **characterised in that** the housing parts (3a, 3b) can be connected to each other by plugging.

18. The residual pressure valve as claimed in claim 16, **characterised in that** the housing parts (3a, 3b) can be connected to each other by flanging, in particular via a flanged edge (3c) formed on a housing part (3a).

19. The residual pressure valve as claimed in claim 16, **characterised in that** the housing parts (3a, 3b) can be connected to each other by a screw connection (3d).

20. The residual pressure valve as claimed in claim 16, **characterised in that** the housing parts (3a, 3b) can be connected to each other by means of latching.

21. The residual pressure valve as claimed in one of claims 16 to 20, **characterised in that** at least two, preferably three, retaining arms for the respective other housing part (3b, 3a) are formed on at least one housing part (3a, 3b), preferably on both housing parts (3a, 3b).

22. The residual pressure valve as claimed in one of claims 1 to 21, **characterised in that** the housing (3) comprises an unpressurized housing chamber (6) surrounding the flexible tubular piece (2), which housing is vented from outside via vent openings.

23. The residual pressure valve as claimed in one of claims 1 to 22, **characterised in that** the flexible tubular piece (2) has a minimum length which is matched to the diameter (DK) of the control element (1) in such a way that the ends (2A, 2B) of the flexible tubular piece (2) remain unaffected by a widening (2C) of the flexible tubular piece (2) by the control element (1).

24. The residual pressure valve as claimed in one of claims 1 to 23, **characterised in that** axial ends (3E1, 3E2) of the housing (3) are formed differently, in particular one end (3E2) having a shaped bore (FB) as a plug receptacle and the other end (3E1) being designed as a plug, possibly having a sealing ring (5).

25. The residual pressure valve as claimed in one of claims 1 to 23, **characterised in that** an axial end (3E2) of the housing (3), preferably on a filling side of the housing (3), has an internal thread (IG), while the other axial end (3E1), preferably on a residual pressure side of the housing (3), has an external thread (AG).

26. The residual pressure valve as claimed in one of claims 1 to 25, **characterised in that** filters (H) are arranged at the axial ends of the hollow spaces (1H1, 1H2) in order to intercept dirt particles.

27. The residual pressure valve as claimed in one of claims 1 to 26, **characterised in that** vent openings are provided as a leakage path in circumferential surfaces (3e, 3f, 3g) and/or in the surfaces of the housing part (3a) that are complementary to the above circumferential surfaces (3e, 3f, 3g).

28. A residual pressure valve having a valve body and a valve seat, the valve seat being formed by a flexible tubular piece (2) which is fixed in a housing (3), consists of an elastomer and surrounds the valve body under elastic prestress, and the valve body being formed by an axially symmetrical control element (1), wherein the control element (1) has a cylindrical, barrel-like or biconical basic shape and has a hollow space (1H1, 1H2) in each case starting from each of its axial ends (1A, 1B), which is in each case connected via at least one channel (K1A, K2A, K3A, K1B, K2B, K3B) to an in particular annular control chamber (SA, SB), which is arranged in the outer surface of the control element (1) and is separated from the respective other control chamber (SB, SA) by a radial intermediate wall (ZW) resting on the flexible tubular piece (2), a predeterminable prestress being set with the aid of a spring (4) surrounding the flexible tubular piece (2) circumferentially **characterised in that** the control chambers (SA, SB) have a different size such that one control chamber (SB) has a larger effective pressure area as compared with the flexible tubular piece (2) then the other control chamber (SA).

29. The residual pressure valve as claimed in claim 28 and as claimed in one or more of the defining clauses of claims 2, 3, 4 to 27.

## Revendications

1. Soupape de pression résiduelle, comportant un corps de soupape et un siège de soupape, le siège de soupape étant formé par un tronçon de tuyau flexible (2) en élastomère, qui est fixé dans un boîtier (3) et qui entoure le corps de soupape sous une précontrainte élastique, et le corps de soupape étant formé par un corps de commande (1) symétrique dans le sens axial, qui possède une forme de base cylindrique, en forme de tonneau ou biconique et comporte en partant de chacune de ses extrémités axiales (1A, 1B) respectivement une cavité (1H1, 1H2), qui communique via au moins un canal (K1A, K2A, K3A, K1B, K2b, K3B) respectivement avec une chambre de commande (SA, SB) annulaire, qui est disposée dans la face extérieure du corps de commande (1) et qui est séparée respectivement de l'autre chambre de commande (SB, SA) par une paroi (ZW) radiale en appui contre le tronçon de tuyau flexible (2),
**caractérisée en ce que** les chambres de commande (SA, SB) ont une taille différente, de telle sorte qu'une chambre de commande (SB) comporte une surface de pression active par rapport au tronçon de tuyau (2) plus grande que celle de l'autre chambre de commande (SA).

2. Soupape de pression résiduelle selon la revendication 1, **caractérisée en ce que** la chambre de commande (SB), sur un côté de remplissage, est plus grande ou comporte une plus grande surface de pression que la chambre de commande (SA) sur un côté de pression résiduelle, et en particulier les canaux (K1A, K2A, K3A, K1B, K2b, K3B) sont orientés dans le sens radial selon un angle de 45° à 90°, de préférence selon un angle de 80°.

3. Soupape de pression résiduelle selon la revendication 1 ou 2, **caractérisée en ce qu'**une précontrainte déterminée préalablement est réglée par un ajustement du diamètre (DS) et de l'épaisseur de paroi (s) du tronçon de tuyau flexible (2) à l'état non tendu en tenant compte de l'élasticité du matériau du tuyau flexible sur un diamètre médian (DK) du corps de commande (1), en particulier dans la zone de la cloison (ZW) de celui-ci.

4. Soupape de pression résiduelle selon l'une quelconque des revendications 1 à 3, **caractérisée en ce qu'**une précontrainte déterminée préalablement est réglée au moyen d'un ressort (4) entourant tout le pourtour du tronçon de tuyau flexible (2).

5. Soupape de pression résiduelle selon l'une quelconque des revendications 1 à 4, **caractérisée en ce que** les cavités (1H1, 1H2) sont formées par des trous borgnes partant des extrémités axiales (1A, 1B) du corps de commande (1).

6. Soupape de pression résiduelle selon l'une quelconque des revendications 1 à 5, **caractérisée en ce que** pour relier les cavités (1H1, 1H2) avec les chambres de commande (SA, SB), il est prévu respectivement trois canaux (K1A, K2A, K3A, K1B, K2b, K3B), décalés entre eux de respectivement 120°, réalisés sous forme de forures transversales radiales orientées selon un angle de 90°.

7. Soupape de pression résiduelle selon l'une quelconque des revendications 1 à 6, **caractérisée en ce que** le tronçon de tuyau flexible (2) est monté de manière immobile en rotation et sans torsion dans le boîtier (3).

8. Soupape de pression résiduelle selon l'une quelconque des revendications 1 à 7, **caractérisée en ce que** le tronçon de tuyau flexible (2) est réalisé sous forme de tuyau flexible profilé, sur les deux zones d'extrémité duquel sont formés des éléments d'étanchéité et de retenue (23) périphériques en forme de bourrelets, qui sont maintenues de manière étanche moyennant une déformation dans des chambres correspondantes réalisées entre le corps de commande (1) et le boîtier (3).

9. Soupape de pression résiduelle selon la revendication 8, **caractérisée en ce que** les éléments d'étanchéité et de retenue (23) sont réalisés en totalité ou en partie sous forme de joints toriques.

10. Soupape de pression résiduelle selon l'une quelconque des revendications 1 à 9, **caractérisée en ce que** le tronçon de tuyau flexible (2) est réalisé symétriquement ou asymétriquement dans le sens axial.

11. Soupape de pression résiduelle selon l'une quelconque des revendications 1 à 10, **caractérisée en ce que** le corps de commande (1) comporte en vue de son montage des zones d'extrémité (K1, K2) coniques, convergeant en sens opposé.

12. Soupape de pression résiduelle selon l'une quelconque des revendications 1 à 11, **caractérisée en ce que** les extrémités (2A, 2B) du tronçon de tuyau flexible (2) sont fixées contre le corps de commande (1), en particulier par l'intermédiaire d'éléments de fixation (HR1), tels que des rainures annulaires, qui sont réalisées sur des bourrelets de fixation (2W) annulaires du tronçon de tuyau flexible (2), ainsi que par l'intermédiaire d'éléments de fixation (HS1) du corps de commande (1), qui agissent dans le sens d'un assemblage par conjugaison de forme et/ou par force et qui sont disposés au niveau des zones d'extrémité (K1, K2) coniques dudit corps de commande.

13. Soupape de pression résiduelle selon l'une quelconque des revendications 1 à 12, **caractérisée en ce que** les extrémités (2A, 2B) du tronçon de tuyau flexible (2) sont fixées contre le boîtier (3), en particulier par l'intermédiaire d'éléments de fixation (HR2), tels que des rainures annulaires, qui sont réalisées sur les bourrelets de fixation (2W) annulaires du tronçon de tuyau flexible (2), ainsi que par l'intermédiaire d'éléments de fixation (HS3) du boîtier (3), qui agissent dans le sens d'un assemblage par conjugaison de forme et/ou par force.

14. Soupape de pression résiduelle selon l'une quelconque des revendications 1 à 13, **caractérisée en ce que** les extrémités (2A, 2B) du tronçon de tuyau flexible (2) sont bloquées entre le corps de commande (1) et le boîtier (3).

15. Soupape de pression résiduelle selon l'une quelconque des revendications 1 à 14, **caractérisée en ce que** le corps de commande (1), en vue de son montage, comporte sur au moins une extrémité (1A) une queue (ST) étagée, en particulier sous la forme d'une terminaison axiale d'une zone d'extrémité (K1) conique.

16. Soupape de pression résiduelle selon l'une quelconque des revendications 1 à 15, **caractérisée en ce que** le boîtier (3) est formé par au moins deux parties (3a, 3b) qui peuvent être assemblées l'une à l'autre par conjugaison de forme et/ou par force.

17. Soupape de pression résiduelle selon la revendication 16, **caractérisée en ce que** les parties (3a, 3b) du boîtier peuvent être assemblées l'une à l'autre par enfichage.

18. Soupape de pression résiduelle selon la revendication 16, **caractérisée en ce que** les parties (3a, 3b) du boîtier peuvent être assemblées l'une à l'autre par sertissage, en particulier par un bord serti (3c) réalisé sur une partie (3a) du boîtier.

19. Soupape de pression résiduelle selon la revendication 16, **caractérisée en ce que** les parties (3a, 3b) du boîtier peuvent être assemblées l'une à l'autre par un assemblage vissé (3d).

20. Soupape de pression résiduelle selon la revendication 16, **caractérisée en ce que** les parties (3a, 3b) du boîtier peuvent être assemblées l'une à l'autre par enclenchement.

21. Soupape de pression résiduelle selon l'une quelconque des revendications 16 à 20, **caractérisée en ce qu'**au moins sur une partie (3a, 3b) du boîtier, de préférence sur les deux parties (3a, 3b) du boîtier, sont réalisés au moins deux, de préférence trois, bras de retenue pour respectivement l'autre partie (3b, 3 a) du boîtier.

22. Soupape de pression résiduelle selon l'une quelconque des revendications 1 à 21, **caractérisée en ce que** le boîtier (3) comporte une chambre (6), qui n'est pas sous pression et entoure le tronçon de tuyau flexible (2) et qui est aérée de l'extérieur par l'intermédiaire d'orifices d'aération.

23. Soupape de pression résiduelle selon l'une quelconque des revendications 1 à 22, **caractérisée en ce que** le tronçon de tuyau flexible (2) a une longueur minimum adaptée au diamètre (DK) du corps de commande (1), de telle sorte que les extrémités (2A, 2B) du tronçon de tuyau flexible (2) ne sont pas influencées par un élargissement (2c) du tronçon de tuyau flexible (2) par le corps de commande (1).

24. Soupape de pression résiduelle selon l'une quelconque des revendications 1 à 23, **caractérisée en ce que** des extrémités axiale (3E1, 3E2) du boîtier (3) sont réalisées différemment, sachant qu'en particulier une extrémité (3E2) possède une forure profilée (FB) pour la réalisation d'un logement d'enfichage et l'autre extrémité (3E1) est réalisée sous forme de raccord enfichable, le cas échéant avec une bague d'étanchéité (5).

25. Soupape de pression résiduelle selon l'une quelconque des revendications 1 à 23, **caractérisée en ce qu'**une extrémité axiale (3E2), de préférence sur un côté de remplissage du boîtier (3), comporte un filetage intérieur (IG) et une extrémité axiale (3E1), de préférence sur un côté de pression résiduelle du boîtier (3), comporte un filetage extérieur (AG).

26. Soupape de pression résiduelle selon l'une quelconque des revendications 1 à 25, **caractérisée en ce que** sur les extrémités axiales des cavités (1H1, 1H2) sont disposés des tamis (H) destinés à arrêter les particules de saletés.

27. Soupape de pression résiduelle selon l'une quelconque des revendications 1 à 26, **caractérisée en ce que** dans des surfaces périphériques (3e, 3f, 3g) de la partie (3b) du boîtier (3) sont réalisés des orifices d'aération formant une voie de fuite et/ou des surfaces de la partie (3a) du boîtier sont complémentaires aux surfaces périphériques (3e, 3f, 3g) ci-dessus.

28. Soupape de pression résiduelle comportant un corps de soupape et un siège de soupape, le siège de soupape étant formé par un tronçon de tuyau flexible (2) en élastomère, qui est fixé dans un boîtier (3) et qui entoure le corps de soupape sous une précontrainte élastique, et le corps de soupape étant formé par un corps de commande (1) symétrique dans le sens axial, qui possède une forme de base cylindrique, en forme de tonneau ou biconique et comporte en partant de chacune de ses extrémités axiales (1A, 1B) respectivement une cavité (1H1, 1H2), qui communique via au moins un canal (K1A, K2A, K3A, K1B, K2b, K3B) respectivement avec une chambre de commande (SA, SB) en particulier annulaire, qui est disposée dans la face extérieure du corps de commande (1) et qui est séparée respectivement de l'autre chambre de commande (SB, SA) par une paroi (ZW) radiale en appui contre le tronçon de tuyau flexible (2), une précontrainte déterminée préalablement étant réglée au moyen d'un ressort (4) entourant tout le pourtour du tronçon de tuyau flexible (2)
**caractérisée en ce que** les chambres de commande (SA, SB) ont une taille différente, de telle sorte qu'une chambre de commande (SB) comporte une surface de pression active par rapport au tronçon de tuyau (2) plus grande que celle de l'autre chambre de commande (SA).

29. Soupape de pression résiduelle selon la revendication 28, ainsi que selon une ou plusieurs des caractéristiques des revendications 2, 3, 4 à 27.
